# EUROPÄISCHE PATENTSCHRIFT

(11) **EP 1 789 705 B1**
(45) Veröffentlichungstag und Bekanntmachung des Hinweises auf die Patenterteilung: **09.11.2011**
(21) Anmeldenummer: 05788661.6
(22) Anmeldetag: 27.07.2005
(51) Int. Cl.: F16H 61/32, F16H 63/02, H02K 19/10

(54) **STELLEINRICHTUNG FÜR EIN STELL-ODER SCHALTELEMENT**
REGULATING DEVICE FOR A REGULATING OR CONTROL ELEMENT
DISPOSITIF DE REGLAGE POUR UN ELEMENT DE COMMUTATION OU DE REGLAGE

(30) Priorität: 18.09.2004 DE 102004045432
(43) Veröffentlichungstag der Anmeldung: 30.05.2007
(73) Patentinhaber: ZF Friedrichshafen AG, 88038 Friedrichshafen (DE)
(72) Erfinder: SCHEPPERLE, Bernd, 78467 Konstanz (DE); LÜBKE, Eckhardt, 88048 Friedrichshafen (DE); KETTELER, Karl-Hermann, 88677 Markdorf (DE); FUESSL, Andreas, 88079 Kressbronn (DE)
(86) Internationale Anmeldenummer: PCT/EP2005/008131
(87) Internationale Veröffentlichungsnummer: WO 2006/029671

(56) Entgegenhaltungen:
- EP-A- 1 257 040
- EP-A1- 1 586 784
- DE-A1- 10 222 339
- DE-A1- 19 749 681
- US-B1- 6 230 576

## Beschreibung

Die Erfindung betrifft ein Verfahren zur Betätigung einer Stelleinrichtung eines Schaltelements eines automatisierten Fahrzeuggetriebes gemäß dem Patentaspruch 1.

Stelleinrichtungen für die Betätigung von Schaltelementen in automatisierten Getrieben besitzen meist einen Stellantrieb, ein Abtriebsglied und ein Übertragungsglied, durch welches ein vom Stellantrieb erzeugtes Moment in eine Stellkraft umgesetzt wird. Dabei werden als Stellantrieb meist Gleichstrommotoren verwendet. Bei einem Gleichstrommotor wird durch einen Stator ein Magnetfeld erzeugt, welches in dem stromdurchflossenen Leiter eines Rotors eine Kraftwirkung erzeugt. Der Strom wird vom Stator meist über Bürsten aus einem Kohlewerkstoff zum Rotor übertragen, weshalb solche Motoren auch Bürstenmotoren genannt werden.

Die DE 102 22 339 A1 beschreibt eine solche Anordnung zur Betätigung einer Kupplung. Ein Gleichstrommotor treibt ein Ausgangselement an, welches über eine Kugelspindel eine Axialbewegung eines Kolbens erzeugt. Dadurch wird eine Steuerung des Einrückens und Ausrückens einer Kupplung ermöglicht. Der Gleichstrommotor wird durch einen Kraftspeicher beim Öffnen der Kupplung unterstützt.

Gleichstrommotoren besitzen eine mit der Drehzahl linear abfallende Momentenkennlinie. Bei einer hohen Drehzahl, die eine schnelle Bewegung zulassen würde, sinkt also das maximale Moment. Außerdem ist der Momentenverlauf solcher Motoren temperaturabhängig. Bei steigender Temperatur steigen nämlich die Widerstände in den Wicklungen, es fällt die Magnetisierung duch die Permanentmagnete und es kann immer weniger Strom in den Rotor übertragen werden, wodurch dann das Motormoment sinkt. Insbesondere im Fall der Kupplungsbetätigung ist der schlecht gekühlte Rotor mit der Ankerwicklung, in der die Verluste entstehen, ein weiterer Nachteil des Bürstenmotors. Durch die auftretenden Verluste bei einer Anwendung zur Betätigung von Schaltelementen ist meist ein Kraftspeicher notwendig, um den Bürstenmotor für die Stellaufgabe zu entlasten.

Gleichstrommotoren haben bauartbedingt Rotoren mit einer Vielzahl an Wicklungen. Die Anzahl der Wicklungen steht dabei direkt in Zusammenhang mit dem maximalen Moment eines Gleichstrommotors. Um ein bestimmtes Moment erreichen zu können, benötigen Gleichstrommotoren also einen bauartbedingten Mindestdurchmesser des Rotors. Dabei fließt der Abstand des Schwerpunktes des Rotors von seiner Drehachse in der 4. Potenz in das Trägheitsmoment ein, wodurch Gleichstrommotoren ein relativ hohes Massenträgheitsmoment besitzen. Wenn das Massenträgheitsmoment verringert werden soll, muss der Rotordurchmesser verringert werden, wodurch dann der Wirkungsgrad des Motors sinkt. Der oben beschriebene Kraftspeicher dient also auch dazu, das Bordnetz zu entlasten, was durch den geringen Wirkungsgrad des Bürstenmotors nötig ist.

Auch besitzt das Bürstensystem von Gleichstrommotoren eine begrenzte Lebensdauer. Insbesondere für langlebige NKW -Anwendungen ist die ausreichende Lebensdauer des Bürstenmotors nicht immer sichergestellt. Mit Rücksicht auf die Lebensdauer des Bürstensytems kann auch nur ein beschränktes Bremsmoment des Stellmotors entwickelt werden. Dieses führt zu verlängerten Stellzeiten.

Die US 6,230,576 B1 beschreibt eine Anordnung zur Änderung der Übersetzung eines automatischen Fahrzeuggetriebes, bei welcher ein bürstenloser Gleichstrommotor über einen Hebelarm eine Parksperre und ein Schaltventil zur Änderung der Getriebeübersetzung betätigt. Zur Ansteuerung des bürstenlosen Gleichstrommotors verfügt die Anordnung über eine Steuereinrichtung und Gleichrichter.

Die DE 197 49 681 A1 offenbart ein automatisiertes Kupplungssystem eines Kraftfahrzeugs. Die Betätigung der Kupplung des Kupplungssystems erfolgt mittels eines als Elektromotor, beispielsweise eines Wechselstrommotors, ausgeführten Antriebsmotor, der zusammen mit einem Getriebe einen Betätigungsaktor bildet und über eine Übertragungsstrecke, ein Betätigungslager sowie ein Betätigungselement auf die Kupplung wirkt (Fig. 14). Dabei rückt das Betätigungselement die Kupplung durch eine Vorspannung Im unbetätigten Zustand teilweise ein, wodurch die Kupplung bei einer Kraftbeaufschlagung über das Betätigungslager in die eine oder andere Richtung vollständig ein- oder ausgerückt werden kann. Eine parallel zu dem Antriebsmotor und dem Getriebe geschaltete Anpressfeder des Betätigungsaktors gestattet es hierbei, durch einen mechanischen Eingriff die Vorlast von der Kupplung zu nehmen und somit den Triebstrang zu unterbrechen.

Aufgabe der Erfindung ist es ein Verfahren für eine Stelleinrichtung für ein Schaltelement zu ermöglichen, welches einen Ausgleich von Toleranzen und Verschleiß vorsieht, wobei die Stelleinrichtung robust ist, gut gekühlt werden kann und einen hohen Wirkungsgrad besitzt. Zudem soll die Stelleinrichtung eine hohe Betätigungsgeschwindigkeit ermöglichen. Um hohe Geschwindigkeiten zu realisieren ist die Verfügbarkeit eines hohen Beschleunigungsmomentes, einer hohen maximalen Drehzahl und eines hohen Verzögerungsmomentes von entscheidender Bedeutung. Hinzu kommt die Anforderung nach einem kleinen Massenträgheitsmoment des Antriebsmotors

Die Lösung dieser Aufgabe ergibt sich aus den Merkmalen des Anspruchs 1, während vorteilhafte Ausgestaltungen und Weiterbildungen der Erfindung den Unteransprüchen zu entnehmen sind.

Erfindungsgemäß wird ein Verfahren für eine Stelleinrichtung vorgeschlagen, welches die Betätigung eines Schaltelementes eines automatisierten Getriebes und einen Ausgleich von Toleranzen und Verschleiß ermöglicht. Die Stelleinrichtung verfügt über einen Stellantrieb, ein Abtriebsglied, und ein Übertragungsglied, durch welches ein vom Stellantrieb erzeugtes Moment in eine Stellkraft umsetzbar ist. Weiterhin ist die Stelleinrichtung mit einer Steuereinrichtung zum Ansteuern des Stellantriebs verbunden und der Stellantrieb ist als Drehstrommotor ausgebildet. Dabei können Synchron- wie Asynchronmotoren verwendet werden.

Bei einem Drehstrommotor wird durch den Stator mit seinen Wicklungen ein Drehfeld erzeugt. Dieses induziert im Falle eines Asynchronmotors im Rotor eine Spannung oder im Falle eines Synchronmotors eine Wechselwirkung mit dem Magnetfeld des Rotors.

Bei einem Asynchronmotor kann der Rotor oder Läufer besonders vorteilhaft als Käfigläufer ausgebildet sein. Hier besitzt der Rotor statt einer Vielzahl an Wicklungen nur einzelne Profilstäbe, welche beispielsweise aus Kupfer, Bronze oder Aluminium bestehen. Dies ist möglich, da der Rotor bei Asynchronmotoren 'nur' die Aufgabe hat einen kräftigen Induktionsstrom zu erzeugen. Ursache für die Induktion ist dabei eine Relativgeschwindigkeit zwischen dem Drehfeld und dem Rotor, was bedeutet, dass die Motordrehzahl immer kleiner als die Drehfelddrehzahl ist. Die Ausführung mit Käfigläufer ist besonders robust und unempfindlich gegen Verunreinigungen. Dadurch kann ein Asynchronmotor in vorteilhafter Weise auch innerhalb eines Ölraumes angebracht werden. Da das Öl durch den Spalt zwischen Rotor und Stator fließen kann, kann solch ein Motor besonders gut gekühlt werden.

Bei Synchronmotoren muss das Feld des Rotors nicht erst durch Induktion hergestellt werden, da der Rotor an sich als Magnet ausgebildet ist. Durch das Drehfeld des Stators bewegt sich der Läufer des Synchronmotors ohne Drehzahldifferenz.

Um ein erforderliches Moment schnell zu erreichen, ist eine hohe Beschleunigung wichtig. Dafür ist es von Vorteil, wenn das Drehmoment des Stellantriebs über der Drehzahl möglichst konstant verläuft. Bei Drehstrommotoren ist es über Steuereinrichtungen möglich, den Verlauf des Drehmoments Ober der Drehzahl in weiten Bereichen konstant zu halten.

Bei Drehstrommotoren liegt die isolierte Wicklung im Stator. Der Rotor ist entweder ein Permanentmagnet oder besitzt eine einfache unisolierte Wicklung. Aus diesem Grund kann der Rotordurchmesser bauartbedingt kleiner ausgeführt werden als bei Gleichstrommotoren. Dadurch ist das Massenträgheitsmoment bauartbedingt geringer, was sich auch positiv auf die maximale Beschleunigung auswirkt.

Der überaus größte Verlustleistungsanteil bei Drehstrommotoren entsteht im Stator, der vorteilhafter Weise außen liegt. An dieser Stelle ist der Stator sehr gut kühlbar, wie z.B. durch Kühlrippen oder thermischen Kontakt mit anderen Bauteilen. Im Gegensatz dazu entstehen die meisten Verluste bei den üblichen Gleichstrommotoren in ihren Rotoren, welche innerhalb des Stators liegen und nur schlecht gekühlt werden können. Bei Drehstrommotoren kann auch über die Steuerung eine Temperaturkompensation vorgenommen werden. Dadurch kann der Temperatureinfluss auf das Motormoment eliminiert werden. Sofern als Stellantrieb ein Asynchronmotor verwendet wird, kann dieser sogar innerhalb eines Ölraumes angebracht werden, wodurch die Kühlung weiter verbessert werden kann. Asynchronmotoren sind viel schmutzunempfindlicher als Gleichstrommotoren mit Bürsten. Bei Asynchronmotoren ist es möglich, dass eine Kühlflüssigkeit zwischen dem Rotor und dem Stator fließt.

Insgesamt besitzen Drehstrommotoren einen guten Wirkungsgrad und belasten das Bordnetz nur gering. Die Gleichspannung des Bordnetzes wird nämlich erst durch Wechselrichter in Drehstrom gewandelt und erst dort entstehen die Blindströme - also außerhalb des Bordnetzes. Bei Gleichstrommotoren wird das maximale Moment bei Stillstand des Ankers erreicht. In diesem Zustand muss dann die Nennspannung des Motors an den Bürsten anliegen, wodurch das Bordnetz direkt belastet wird und der Motor hohe Verluste aufnimmt. Zudem sind die Wicklungswiderstände von Drehstrommotoren wesentlich geringer. Somit treten in einem Drehstrommotor bei gleichem Moment wie bei einem Gleichstrommotor wesentlich weniger Verluste auf. Das maximale Moment kann dann wegen der kleineren Verlustleistung auch länger beibehalten werden. Das Bordnetz wird signifikant geringer belastet.

Bei der Verwendung bekannter Stelleinrichtungen mit Gleichstrommotor für die Betätigung eines Schaltelementes wie z. B. eine Kupplung oder eine Bremse ist eine Kraftkompensation notwendig. Die Kraftkompensation unterstützt den Gleichstrommotor beim Öffnen oder Schließen des Schaltelementes. Z. B. wird durch eine vorgespannte Feder die Dynamik einer solchen Stelleinrichtung verstärkt. Dabei fordern bestimmte Konzepte der Kraftkompensation zusätzlich eine Wegkompensation. Die Wegkompensation gleicht Abweichungen durch Toleranzen und Abnutzungserscheinungen innerhalb der Stelleinrichtung aus. Mit der Wegkompensation wird sichergestellt, dass sich der Nullpunkt des Ein- und Ausrückens des Schaltelements nicht verschiebt.

Durch die vorteilhaften Eigenschaften von Drehstrommaschinen kann im Abtriebsglied ohne Kraftkompensation eine für den Stell- oder Schaltvorgang ausreichende Stellkraft erzeugt werden, und es kann auf eine Kraftkompensation verzichtet werden. Ohne Kraftkompensation ist auch keine Wegkompensation mehr notwendig. Damit kann durch die Verwendung einer erfindungsgemäßen Stelleinrichtung auf viele Bauteile und einen komplizierten Aufbau verzichtet werden.

Mit der erfindungsgemäßen Stelleinrichtung können Toleranzen und Abnutzungserscheinungen von Schaltelementen direkt ausgleichen werden. Um dies zu ermöglichen wird vom Stellantrieb ein Drehmoment aufgebracht, welches eine geringe Stellkraft erzeugt. Diese Stellkraft ist unterhalb des Grenzwertes, welcher mindestens aufgebracht werden muß, damit das Schaltelement ein- beziehungsweise ausgerückt werden kann. Dadurch wird das Betätigungselements zwar mit einer geringen Stellkraft beaufschlagt, die Funktion des Schaltelements aber noch nicht beeinflusst. Durch diese Belastung des Betätigungselements werden Toleranzen oder Abnutzungserscheinungen in der Betätigungsrichtung des Schaltelementes ausgeglichen. Dies könnte z. B. der Ausgleich der Abnutzung einer Kupplungsscheibe sein. Dadurch wird sichergestellt, dass immer der gesamte notwendige Stellweg für das ein- oder ausrücken des Schaltelementes aufgebracht wird und nicht durch den Ausgleich von Toleranzen verwendet wird.

Das Betätigungselement besitzt üblicher Weise mindestens ein Wälzlager. Durch die Belastung des Betätigungselementes werden vorteilhafter Weise auch die Wälzkörper des Lagers mit einer geringen Last beaufschlagt. Dadurch werden die Wälzkörper so belastet, dass sie sich gleitfrei im Lagerring abwälzen. Würden sie nicht belastet werden, würden sie in einer bestimmten Position stehen bleiben und der sich drehende Lagerring an den Wälzkörpern schleifen. Durch die Belastung des Lagers wird also der Verschleiß der Wälzkörper verringert.

Zur weiteren Verdeutlichung der Erfindung sowie dessen Ausführungformen ist der Beschreibung eine Zeichnung beigefügt.
In dieser zeigt
- Fig. 1: Einen schematischen Aufbau einer erfindungsgemäßen Stelleinrichtung zur Betätigung eines Schaltelements,
- Fig. 2: einen weiteren schematischen Aufbau einer erfindungsgemäßen Stelleinrichtung zur Betätigung eines Stellelements,
- Fig. 3: ein Prinzipbild eines Belastungszustandes
- Fig. 4: ein Prinzipbild eines Belastungszustandes
- Fig. 5: ein Prinzipbild eines Belastungszustandes
- Fig. 6: Schaubild der notwendigen Stellkraft

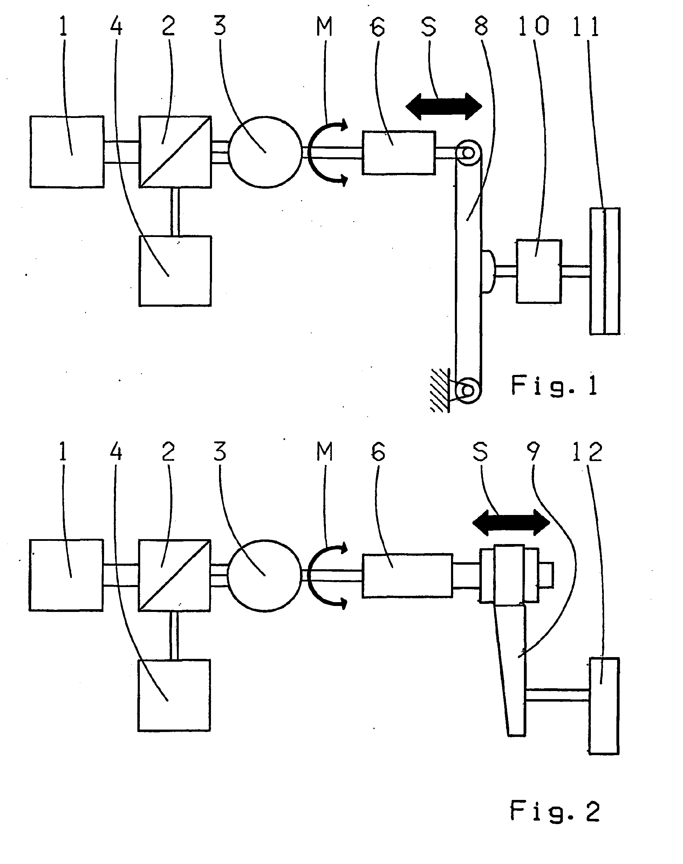

Fig. 1 zeigt den schematischen Aufbau einer erfindungsgemäßen Stelleinrichtung für eine Kupplungsfunktion. Eine Batterie 1 versorgt die Wechselrichter 2 mit einer Gleichspannung. Aus dieser Gleichspannung wird über die Wechselrichter 2 eine Wechselspannung erzeugt. Der Wechselrichter 2 wird über die Steuereinrichtung 4 angesteuert und leitet die Wechselspannung an den Stellantrieb 3 weiter. Der Stellantrieb 3 wird mit der Wechselspannung angetrieben und erzeugt an seinem Ausgang ein Moment M. Dieses Moment M wird in dem Übertragungsglied 6 direkt in eine Stellkraft S übertragen. Über das Übertragungsglied 6 wird ein Abtriebsglied 8 mit der Stellkraft S beaufschlagt. Das Abtriebsglied 8 beaufschlagt damit ein Betätigungselement 10, welches die Stellkraft an ein Schaltelement 11 weiterleitet. Das Schaltelement 11 kann beispielsweise eine Kupplung oder eine Bremse sein.

Fig. 2 zeigt einen schematischen Aufbau einer Stelleinrichtung für eine Schaltfunktion. Gleiche Ziffern wie in Fig. 1 bezeichnen dabei gleiche Bauteile. Die axiale Kraft S wird hier auf ein Abtriebsglied 9, wie beispielsweise eine Schaltschwinge oder Schaltgabel, übertragen. Die Schaltschwinge oder Schaltgabel 9 wählt dann über ein Stellelement 12 beispielsweise einen Gang in einem Fahrzeuggetriebe aus. Dies könnte beispielsweise einer Schaltmuffe in einem klauengeschalteten Fahrzeuggetriebe entsprechen.

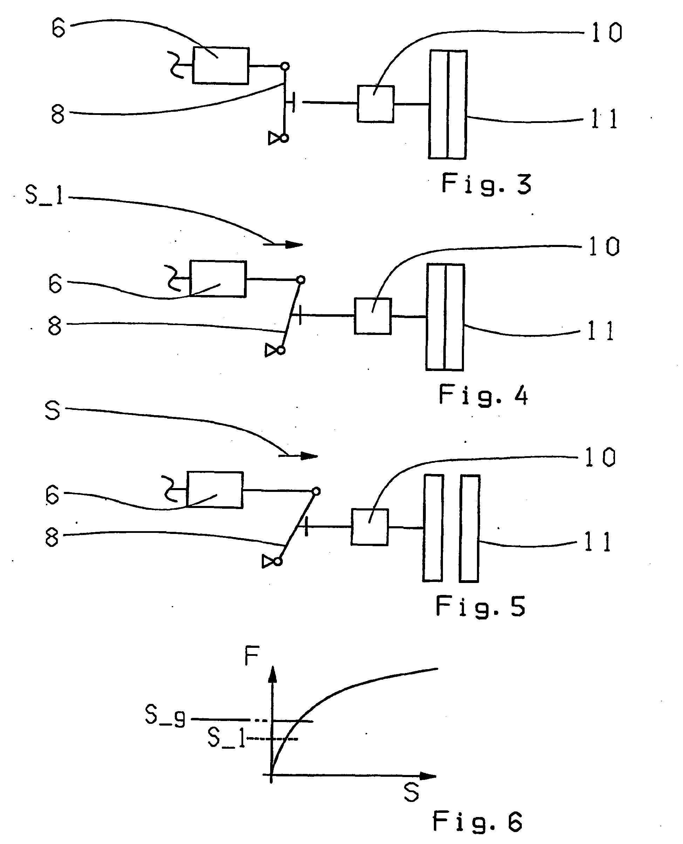

Fig. 3 zeigt das Übertragungsglied 6 mit dem Abtriebsglied 8, dem Betätigungselement 12 sowie das Schaltelement 11. Die Darstellung zeigt beispielsweise den Montagezustand einer Stelleinrichtung für eine trockene Anfahrkupplung. Dabei wird noch keine Stellkraft S vom Übertragungsglied 6 auf das Abtriebsglied 8 übertragen. Dadurch gibt es noch keine Kraftübertragung zwischen dem Abtriebsglied 8 und dem Betätigungselement 10.

Fig. 4 zeigt eine Stelleinrichtung entsprechend Fig. 3, wobei hier vom Übertragungsglied eine Stellkraft S_1 auf das Abtriebsglied 8 übertragen wird. Die Stellkraft S_1 ist dabei geringer als eine Grenzstellkraft S_g, welche notwendig ist um ein Schaltelement 11 ein- beziehungseise auszurücken. Dadurch wird das Betätigungselement 10 belastet, das Schaltelement 11 in seiner Funktion aber noch nicht beeinflußt. Dieser Zustand kann sich erfindungsgemäß permanent während des Betriebes des Fahrzeuges einstellen. Durch diese Belastung können zum einen Toleranzen und Abnutzungserscheinungen ausgeglichen werden. Zum anderen können die Lager des Betätigungselements 10, wie z.B. ein Ausrücklager, belastet werden. Dadurch kann eine verschleißfreie Bewegung des Ausrücklagers sichergestellt werden.

Fig. 5 zeigt auch eine Stelleinrichtung entsprechend der Fig. 3, wobei hier eine Stellkraft S auf das Abtriebsglied 8 wirkt, welche über der Grenzstellkraft S_g liegt, welche mindestens notwendig ist um ein Schaltelement 11 einbeziehungsweise auszurücken. Dadurch erst wird das Schaltelement 11 betätigt.

Fig. 6 zeigt den Verlauf f der notwendigen Stellkraft S für die Betätigung des Schaltelementes 11 über den Verstellweg. Die erste Stellkraft S_1 stellt dabei eine Stellkraft S dar, welche zwar das Betätigungselement 10 belastet, aber noch keine Auswirkung auf die Funktion des Schaltelementes 11 hat. Der Wert der Grenzstellkraft S_g bezeichnet den Wert der Stellkraft S, der mindestens aufgebracht werden muß, damit das Schaltelement 11 ein- beziehungsweise ausgerückt wird.

### Bezugszeichen

- 1: Batterie
- 2: Wechselrichter
- 3: Stellantrieb
- 4: Steuereinrichtung

- 6: Übertragungsglied

- 8: Abtriebsglied
- 9: Abtriebsglied
- 10: Betätigungselement
- 11: Schaltelement
- 12: Stellelement

- M: Moment
- S: Stellkraft
- S_1: Stellkraft
- S_g: Grenzstellkraft

## Patentansprüche

1. Verfahren zur Betätigung einer Stelleinrichtung eines Schaltelementes (11) eines automatisierten Fahrzeuggetriebes, mit einem als Drehstrommotor ausgebildeten Stellantrieb (3), einer Steuereinrichtung (4), einem Übertragungsglied (6) sowie einem Abtriebsglied (8), wobei der Stellantrieb (3) von der Steuereinrichtung (4) über einen Wechselrichter (2) angesteuert wird und elektrische Energie in ein Moment (M) umsetzt, welches durch das Übertragungsglied (6) eine axiale Stellkraft (S, S_1, S_g) erzeugt, welche wiederum über das Abtriebsglied (8) auf das Schaltelement (11) des Fahrzeuggetriebes übertragen wird, wobei
- permanent vom Stellantrieb (3) eine Stellkraft (S_1) erzeugt wird, welche geringer ist als eine Grenzstellkraft (S_g), die mindestens aufgebracht werden muß, damit das Schaltelement (11) betätigt wird, wobei das Schaltelement in seiner Funktion noch nicht beeinflusst wird und Toleranzen und Abnutzungserscheinungen in einer Betätigungsrichtung des Schaltelementes (11) ausgeglichen werden, und
- für die Betätigung des Schaltelementes (11) das Abtriebsglied (8) das Betätigungselement (10) mit einer Stellkraft (S), welche über der Grenzstellkraft (S_g) liegt, beaufschlagt und dadurch das Schaltelement (11) betätigt.

2. Verfahren nach Anspruch 1, **dadurch gekennzeichnet, dass** die Betätigung des Schaltelements (11) das Ein- und Ausrücken einer Kupplung oder Bremse ist.

3. Verfahren nach einem der vorherigen Ansprüche, **dadurch gekennzeichnet, dass** die Stellkraft (S) zur Betätigung des Abtriebsglieds (8) bei einer Stellaufgabe zur Betätigung eines Schaltelementes (11) nur durch den Stellantrieb (3) gebildet wird.

4. Verfahren nach einem der Ansprüche 1 bis 3, **dadurch gekennzeichnet, dass** mit der Stelleinrichtung die Auswahl eines Ganges in einem Fahrzeuggetriebe vorgenommen wird.

## Claims

1. Method for operating an actuating device of a shift element (11) of an automatic vehicle gearbox, having an actuating drive (3) which is designed as a three-phase motor, having a control device (4), having a transmission member (6) and having a drive output member (8), wherein the actuating drive (3) is driven by the control device (4) via an inverter (2) and converts electrical energy into a torque (M) which, by means of the transmission member (6), generates an axial actuating force (S, S_1, S_g) which in turn is transmitted via the drive output member (8) to the shift element (11) of the vehicle gearbox, wherein
- the actuating drive (3) permanently generates an actuating force (S_1) which is lower than a limit actuating force (S_g) which must as a minimum be imparted in order to actuate the shift element (11), wherein the shift element is not yet influenced in terms of its function and tolerances and wear phenomena in an actuating direction of the shift element (11) are compensated, and
- for the operation of the shift element (11), the drive output member (8) exerts on the operating element (10) an actuating force (S) greater than the limit actuating force (S_g), and thereby operates the shift element (11).

2. Method according to Claim 1, **characterized in that** the operation of the shift element (11) is the engagement and disengagement of a clutch or brake.

3. Method according to one of the preceding claims, **characterized in that** the actuating force (S) for operating the drive output member (8) during an actuating function for operating a shift element (11) is generated only by the actuating drive (3).

4. Method according to one of Claims 1 to 3, **characterized in that** the selection of a gear in a vehicle gearbox is carried out by means of the actuating device.

## Revendications

1. Procédé pour commander un actionneur d'un élément de commutation (11) d'une transmission automatisée de véhicule, comprenant une commande de réglage (3) réalisée sous forme de moteur triphasé, un dispositif de commande (4), un organe de transfert (6) ainsi qu'un organe de sortie (8), la commande de réglage (3) étant commandée par le dispositif de commande (4) par le biais d'un onduleur (2) et convertissant l'énergie électrique en un couple (M), qui produit une force de réglage axiale (S, S_1, S_g) par le biais de l'organe de transfert (6), laquelle force de réglage est transmise à son tour par le biais de l'organe de sortie (8) à l'élément de commutation (11) de la transmission du véhicule,
- une force de réglage (S_1) étant produite de manière permanente par la commande de réglage (3), laquelle force est inférieure à une force de réglage limite (S_g), qui doit être appliquée au moins pour actionner l'élément de commutation (11), le fonctionnement de l'élément de commutation n'étant pas influencé et les tolérances et effets d'usure dans une direction d'actionnement de l'élément de commutation (11) étant compensés, et
- pour l'actionnement de l'élément de commutation (11), l'organe de sortie (8) sollicitant l'élément d'actionnement (10) avec une force de réglage (S) qui est supérieure à la force de réglage limite (S_g), et actionnant de ce fait l'élément de commutation (11).

2. Procédé selon la revendication 1, **caractérisé en ce que** l'actionnement de l'élément de commutation (11) est l'embrayage ou le débrayage d'un embrayage ou d'un frein.

3. Procédé selon l'une quelconque des revendications précédentes, **caractérisé en ce que** la force de réglage (S) pour l'actionnement de l'organe de sortie (8) est formée uniquement par la commande de réglage (3) lors d'un ordre de réglage pour l'actionnement d'un élément de commutation (11).

4. Procédé selon l'une quelconque des revendications 1 à 3, **caractérisé en ce que** l'actionneur permet d'effectuer la sélection d'un rapport de vitesse dans une transmission de véhicule.
